(19) Europäisches Patentamt / European Patent Office / Office européen des brevets

(11) **EP 4 782 741 A1**

(12) **EUROPEAN PATENT APPLICATION**
published in accordance with Art. 153(4) EPC

(43) Date of publication:
29.07.2026 Bulletin 2026/31

(21) Application number: 24867854.2

(22) Date of filing: 19.06.2024

(51) International Patent Classification (IPC):
*F17D 3/01* (2006.01)     *C01B 3/00* (2026.01)
*F17C 7/00* (2006.01)     *F17D 1/04* (2006.01)

(52) Cooperative Patent Classification (CPC):
C01B 3/00; F17C 7/00; F17D 1/04; F17D 3/01

(86) International application number:
PCT/JP2024/022153

(87) International publication number:
WO 2025/062768 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.09.2023 JP 2023158500

(71) Applicant: Hitachi, Ltd.
Tokyo 100-8280 (JP)

(72) Inventors:
• MEDRANO, Katleya
Tokyo 100-8280 (JP)
• YASHIKI, Tatsurou
Tokyo 100-8280 (JP)
• IIZUKA, Hidehiro
Tokyo 100-8280 (JP)
• ISHIDA, Naoyuki
Tokyo 100-8280 (JP)
• INAGAKI, Ryohei
Tokyo 100-8280 (JP)
• KAWAHARA, Yohei
Tokyo 100-8280 (JP)
• KIM, Eunkyeong
Tokyo 100-8280 (JP)
• WATANABE, Ayumi
Tokyo 100-8280 (JP)

(74) Representative: Mewburn Ellis LLP
Aurora Building
Counterslip
Bristol BS1 6BX (GB)

(54) **PIPELINE MANAGEMENT SYSTEM**

(57) A pipeline management system according to the present invention is a pipeline management system for monitoring a pipeline that supplies gas to an end user, including a pipeline system to which gas is supplied and a control system for controlling the pipeline system, in which the pipeline system includes a gas source, a pipe connected to the gas source, a gas separation device connected to the pipe and configured to separate gas supplied from the gas source into a plurality of gas streams, a first flow sensor that measures a flow rate of gas supplied to a main supply pipe of the pipeline, a second flow sensor that measures a flow rate of product gas flowing out of the gas separation device, and a first concentration sensor that measures a concentration of the product gas, and the control system includes a recording unit that records measurement data of the first and second flow sensors and measurement data of the first concentration sensor, and a calculation unit that calculates a concentration of a gas stream at a position along a supply gas supplied to the gas separation device and a flow rate and a concentration of a gas stream at a position downstream of a return gas returned from the gas separation device to the main supply pipe according to mass balance on the basis of measurement results of the first and second flow sensors and the first concentration sensor.

EP 4 782 741 A1

# Fig. 1

## Description

Technical Field

The present invention relates to a pipeline management system that monitors a fluid composition and a flow rate in a pipeline.

Background Art

Hydrogen plays an important role in accelerating decarbonization. One implementation strategy for hydrogen is to recycle an existing natural gas pipeline as a hydrogen pipeline. In particular, Patent Literature 1 discloses a method for monitoring a hydrogen supply pipeline useful for this strategy. However, in order to maintain energy security, it is expected that natural gas will continue to be an important energy source in the future. Therefore, rather than completely reusing a natural gas pipeline to transport hydrogen, it is a more attractive option to inject hydrogen into the natural gas pipeline to mix hydrogen and natural gas.

The mixed gas of hydrogen and natural gas is transported to various end users such as households, factories, and facilities through pipelines. Some end users require a fuel rich in hydrogen, while other end users require a fuel rich in natural gas, which ultimately requires installing a gas separation device in the pipeline to separate the mixed gas.

In order to ensure that the required gas quality is supplied to end users, it is important to monitor the gas composition upstream and downstream of the gas separation device. However, considering the size of the existing pipeline, there are concerns about high installation and maintenance costs incurred by additional concentration sensors.

Citation List

Patent Literature

Patent Literature 1: JP 2023-044745 A
Patent Literature 2: JP 2022-015364 A

Summary of Invention

Technical Problem

Patent Literature 2 discloses a means for monitoring the composition of a mixed fluid by installing flow sensors upstream and downstream of a gas mixing point. The disclosed method uses the measured output of the flow sensors to calculate the composition, instead of installing a concentration sensor.

The method disclosed in Patent Literature 2 can reduce the monitoring cost in pipelines with a mixing process. However, since the literature only focuses on determining the composition for mixing of gases, it is not disclosed to monitor the concentration in order to separate the gases through the gas separation device.

The present invention has been made in view of the above problems, and an object of the present invention is to provide a means capable of monitoring a gas composition by a gas separation device with a small number of sensors installed.

Solution to Problem

A pipeline management system according to the present embodiment is a pipeline management system for monitoring a pipeline that supplies gas to an end user, the pipeline management system including: a pipeline system to which gas is supplied; and a control system for controlling the pipeline system, in which the pipeline system includes: a gas source; a pipe connected to the gas source; a gas separation device connected to the pipe and configured to separate the gas supplied from the gas source into a plurality of gas streams; a first flow sensor that measures a flow rate of gas supplied to a main supply pipe of the pipeline; a second flow sensor that measures a flow rate of a product gas flowing out of the gas separation device; and a first concentration sensor that measures a concentration of the product gas, and the control system includes: a recording unit that records measurement data of the first and second flow sensors and the first concentration sensor; and a calculation unit that calculates a concentration of a gas stream at a position along a supply gas supplied to the gas separation device and a flow rate and a concentration of a gas stream at a position downstream of a return gas returned from the gas separation device to the main supply pipe according to mass balance on the basis of measurement results of the first and second flow sensors and the first concentration sensor.

Advantageous Effects of Invention

According to the present invention, by calculating the composition at an unmeasured point, it is possible to monitor the gas composition by the gas separation device with a small number of sensors installed.
Further features related to the present invention will become apparent from the description of the present specification and the accompanying drawings. Problems, configurations, and effects other than those described above will be clarified by the following description of embodiments.

Brief Description of Drawings

Fig. 1 is a diagram illustrating an example of a system 1 for monitoring a pipeline 2.
Fig. 2 is a block diagram illustrating an example of applying mass balance to the pipeline 2.
Fig. 3 is a diagram illustrating a display according to an output of the system 1 that monitors the pipeline 2.
Fig. 4 is a diagram illustrating an example of a pipeline 2c monitored by the system 1.
Fig. 5 is a diagram illustrating an example of a system 1b that monitors a pipeline 2b.
Fig. 6 is a diagram illustrating an output of the system 1b for detecting abnormality measurement of a flow sensor.
Fig. 7 is a diagram illustrating an output of the system 1b for detecting abnormality measurement of a concentration sensor.
Fig. 8A is a diagram illustrating a time delay in a pipeline.
Fig. 8B is a diagram illustrating an output of the system 1b for detecting abnormality measurement of a flow sensor in consideration of a time delay.
Fig. 9 is a diagram illustrating an example of display output for classifying reliability levels.
Fig. 10 illustrates an example of a pipeline including a compressor and a turbine monitored by the system 1b.

Description of Embodiments

Hereinafter, embodiments of the present invention will be described with reference to the drawings.

[Embodiment 1]

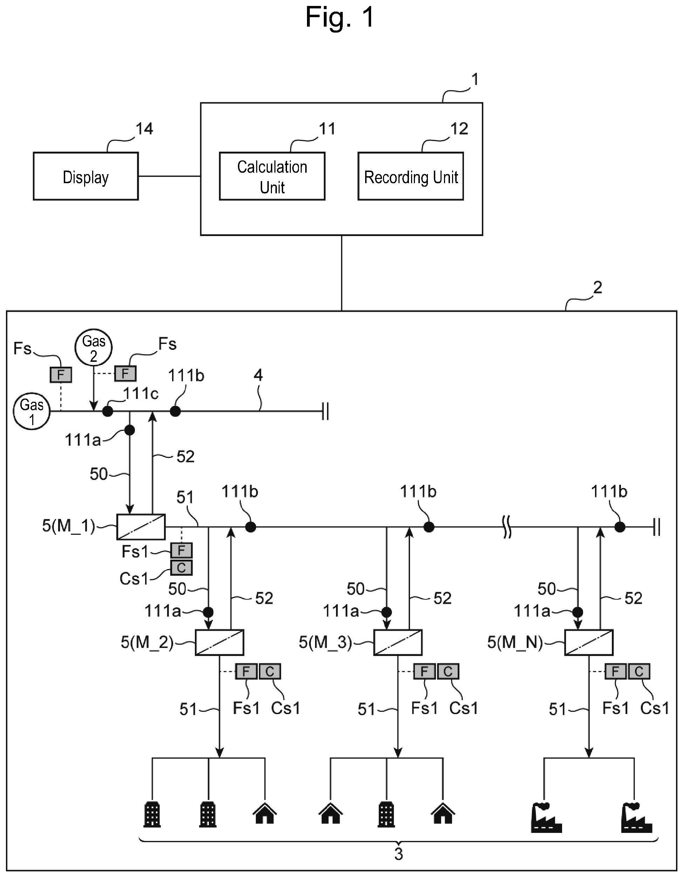

Fig. 1 is a diagram illustrating a configuration example of a system 1 that monitors a gas flow rate and a composition (concentration) in a pipeline 2 including a plurality of gas separation devices 5.

(Pipeline 2)

In the present embodiment, a pipeline management system includes the pipeline 2 to which gas is supplied and the system 1 that controls the pipeline 2. The pipeline 2 has a first gas source (gas 1), a second gas source (gas 2), pipes connected to the gas sources, and the plurality of gas separation devices 5 that are connected to the pipes and separate a gas stream supplied from the gas sources into a plurality of gas streams, and supplies gases to end users 3 through a network of pipes. Here, in the present specification, an end user refers to a person/group who demands gas at a gas supply destination. In the drawing, the pipe is represented by a line with an arrow indicating the flow direction of gas. The gas 1 and the gas 2 are mixed and supplied to each gas separation device 5 through a main supply pipe 4. The gas 1 and the gas 2 have different compositions, and the gas 1 and the gas 2 have known compositions. For example, the gas 1 may be natural gas and the gas 2 may be pure hydrogen. The present embodiment is also applied to a pipeline 2 with an additional source of gas having a known composition. The additional gas source may be, for example, a natural gas extraction plant, a hydrogen production plant, a methanation plant or the like.

(Gas Separation Device 5)

As described above, the pipeline 2 includes the plurality of gas separation devices 5 (hereinafter, simply referred to as separation devices) including a first gas separation device M_1, a second gas separation device M_2, a third gas separation device M_3, and an N-th gas separation device M_N. In this example, a gas flow stream through the main supply pipe 4 is supplied to the first separation device M_1, and a product gas 51 flowing out of the separation device M_1 is supplied to the separation devices M_2 to M_N. However, the present invention is not limited to this supply form, and for example, a gas stream flowing through the main supply pipe 4 may be supplied to the plurality of separation devices.

Generally, the gas separation device 5 separates the supply of mixed gas into two gas streams having different purities. For example, a first gas stream is rich in the gas 1 and a second gas stream is rich in the gas 2. Furthermore, the first gas stream is returned to the pipe network and the second gas stream is consumed by being supplied to the end user 3 or to another separation device 5. The first gas stream returned from a gas separation device 5 to the upstream pipe network is hereinafter referred to as a return gas 52. The second gas flow flowing out downstream from a gas separation device 5 is hereinafter referred to as a product gas 51, and a mixed gas supplied to a separation device 5 is hereinafter referred to as a supply gas 50. It should be noted that each separation device 5 is supplied with a separate supply gas 50. The product gas 51 and the return gas 52 all have different flow rates and concentrations.

(Sensor)

The pipeline 2 also includes a plurality of flow sensors and concentration sensors. The flow sensor measures a flow rate of a gas through differential pressure, thermal properties, and other known methods. The concentration sensor may measure a gas concentration using gas chromatography, calorimeters, or other known methods. Specifically, as illustrated in Fig. 1, the pipeline 2 is provided with a flow sensor Fs that measures a flow rate of a gas supplied from a gas source to the main supply pipe 4.

Further, the pipeline 2 is provided with a flow sensor Fs1 that measures the flow rate of the product gas 51 flowing out from each gas separation device 5. Further, the pipeline 2 is provided with a concentration sensor Cs1 that measures the concentration of the product gas 51. The above-described sensors are included in elements constituting a pipeline system including a pipeline through which a gas stream is supplied. Note that, since the composition of the gas 1 or the gas 2, which is the gas source, is known as described above, a concentration sensor for the gas 1 or the gas 2 is not necessary.

(System 1)

In order to meet end user requirements for gas quality, the plurality of gas separation devices 5 in the pipeline 2 need to be controlled in particular to produce a product gas 51 which satisfies a target level of gas purity. Monitoring the gas flow rates and the concentrations of the supply gas 50 and the product gas 51 is particularly important in controlling the gas separation devices 5.

As described above, the system 1 monitors the gas and the composition in the pipeline 2. The system 1 is connected to the pipeline 2 via a wireless or wired network, and includes a calculation unit 11 including a central processing unit (CPU) and a recording unit 12 including a memory. The system 1 can receive and record measurement data of the flow sensors Fs and Fs1 and the concentration sensor Cs1 installed in the pipeline 2 via the recording unit 12. The system 1 may visually display the stored measurement data of the flow rate and concentration sensors on a display 14 such that a user of the present embodiment can monitor the gas supplied to the main supply pipe 4 and the gas flow rate and concentration of the product gas 51 of each gas separation device 5. The system 1 also allows, via the calculation unit 11, calculation of gas flow rates and of concentrations at points 111a and 111b upstream of the gas separation devices 5. Note that instead of using sensors, the user of the present embodiment can also monitor the gas flow rates and concentrations at the points 111a and 111b on the basis of the calculated conditions.

(Calculation Unit 11)

Specifically, the calculation unit 11 calculates the concentration at the point 111a and the flow rate and concentration at the point 111b for each gas separation device 5 by using the law of conservation of mass or simply mass balance. The positions of the points 111a and 111b of the pipeline 2 are represented by black circles in the drawing. The point 111a is located on the pipe through which the supply gas 50 flows. Accordingly, the flow rate calculated at the point 111a can be used to monitor the flow of the supply gas 50 in the separation device 5. The point 111b is located downstream of the position of the pipe to which the return gas 52 has been returned. Accordingly, the calculated flow rate and concentration at the point 111b can be used to monitor the flow rate and concentration of the gas downstream of the return gas 52 of the separation device 5. Here, each separation device 5 has a corresponding point 111a and point 111b.

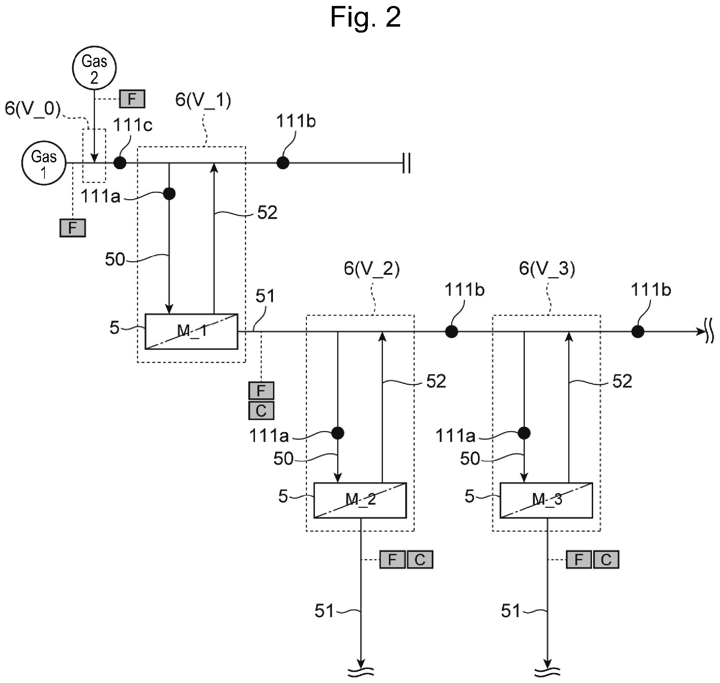

The calculation unit 11 also calculates the concentration and the flow rate at a point 111c located downstream of the mixing point of the gas 1 and the gas 2. The calculation unit 11 sequentially calculates the gas flow rates and the concentrations at the points 111a, 111b, and 111c from the most upstream point toward the most downstream point. Therefore, in this example, the calculation unit 11 sequentially performs calculation from the point 111c located downstream of the point at which the gas 1 and the gas 2 join to the point 111b of the separation device M_N. In general, the calculation at the downstream point requires calculation data at the upstream point, and thus it is useful to perform the calculation in this order. A general method of evaluating mass balance is to define an inspection volume 6 (refer to Fig. 2). The static overall mass balance of the inspection volume 6 can be evaluated using Formula (1).

$$\Sigma\Sigma min = \Sigma mout \ (1)$$

Here, min (kg/s) is a flow rate at the inlet of the inspection volume 6, and mout (kg/s) is a flow rate at the outlet of the inspection volume 6. Since there may be a plurality of inlets and a plurality of outlets, Formula (1) includes a summation operation ($\Sigma$).

Furthermore, the static mass balance of a gas component A in the inspection volume 6 can be defined by Formula (2).

$$\Sigma Cin \ min = \Sigma Cout \ mout \ (2)$$

Here, Cin (kg/kg) is the concentration of the gas component A in the inlet stream and Cout (kg/kg) is the concentration of the gas component A in the outlet stream. In this example, the inlet or outlet stream components can be the gas 1 only, the gas 2 only, or a mixture of the gas 1 and the gas 2.

Fig. 2 is a block diagram illustrating evaluation of mass balance for calculating conditions at the points 111b and 111c.

(Point 111c)

In order to calculate the flow rate and the concentration at the point 111c, the calculation unit 11 can define the inspection volume 6 such that the point 111c is located on the outlet side and the inlet flow is the gas source which is the gas 1 and the gas 2. In this example, an inspection volume 6(V_0) is defined. By calculating Formula (1) for the inspection volume 6(V_0) and using measurement data of the flow sensors Fs of the gas 1 and the gas 2 as input data, the calculation unit 11 can calculate the flow rate at the point 111c. Furthermore, the calculation unit 11 can calculate the concentration at the point 111c using Formula (2) using the measurement data of the flow sensors Fs of the gas 1 and the gas 2 and concentration information of the gas 1 and the gas 2. As described above, the concentrations of the gas 1 and the gas 2 are known values, and are stored in advance in the recording unit 12.

(Point 111b)

In order to calculate the conditions at the points 111b of the separation devices 5, the calculation unit 11 can define inspection volumes 6 such that the inspection volumes 6 surround only one separation device 5 and the points 111b are located on the outlet sides of the separation devices 5. In this example, the calculation unit 11 can define inspection volumes 6(V_1), 6(V_2), and 6(V_3) for calculating the flow rates and concentrations at the points 111b of the separation devices M_1, M_2, and M_3. An example of the inspection volume 6 defined for the other points 111b is not shown, but the same principles apply. The calculation unit 11 can calculate Formulas (1) and (2) for the inspection volume 6(V_1), and use measurement data of the flow sensor Fs1 and the concentration sensor Cs1 for monitoring the product gas 51 of the separation device M_1 and the flow rate and concentration calculated at the point 111c as input data to calculate the flow rate and the concentration at the point 111b of the separation device M_1.

In addition, the calculation unit 11 can calculate Formulas (1) and (2) for the inspection volume 6(V_2), and use measurement data of the flow sensors Fs1 and the concentration sensors Cs1 for monitoring the product gas 51 of the separation device M_2 and the separation device M_1 in the preceding stage as input data to calculate the flow rate and the concentration at the point 111b of the separation device M_2. Further, the calculation unit 11 can calculate Formulas (1) and (2) for the inspection volume 6(V_3), and use measurement data of the flow sensor Fs1 and the concentration sensor Cs1 for monitoring the product gas 51 of the separation device M_3 and the calculation condition at the point 111b of the upstream separation device M_2 as input data to calculate the flow rate and the concentration at the point 111b of the separation device M_3.

Since the calculation of the flow rates and the concentrations at the points 111b of the separation devices M_4 to M_N is similar to the calculation described for the point 111b of the separation device M_3, the further description thereof will be omitted. Except for the calculation of the flow rate and the concentration at the point 111b of the separation device M_2, the calculation data of the upstream point is required as input data for the calculation of the condition at the point 111b of the separation device 5 (for the calculation of the flow rate and the concentration at the point 111b of the separation device M_2, measurement data of the flow sensor Fs1 and the concentration sensor Cs1 for monitoring the product gas 51 of the separation device M_1 are used as input data). This relationship emphasizes the importance of the order in the calculation by the calculation unit 11, that is, the calculation from the most upstream point to the most downstream point.

(Point 111a)

Production of the supply gas 50 is the result of a simple branching of the pipe 4 and does not involve mixing or separation of gas components. Therefore, based on the mass balance, the gas concentration at the point 111a is the same as the upstream gas concentration. This can be mathematically expressed by Formula (3).

$$C_{111a} = C_{upstream} \quad (3)$$

Here, $C_{111a}$ (kg/kg) is the gas concentration at the point 111a, and $C_{upstream}$ is the gas concentration upstream of the point 111a.

To define the gas concentration upstream of the point 111a, the calculation unit 11 may use measurement data or previously calculated data. As a first example, when calculating Formula (3) for calculating the concentration at the point 111a of the separation device M_1, the calculation unit 11 can define $C_{upstream}$ using the calculated concentration at the point 111c. As a second example, when calculating Formula (3) for calculating the concentration at the point 111a of the separation device M_2, the calculation unit 11 can define $C_{upstream}$ using the measurement data of the concentration sensor Cs1 for monitoring the product gas 51 of the separation device M_1. As a third example, when calculating Formula (3) for calculating the concentration at the point 111a of the separation device M_3, the calculation unit 11 can define $C_{upstream}$ using the calculated concentration at the point 111b of the separation device M_2 on the upstream side. Since the subsequent calculation of Formula (3) for calculating the concentrations at the points 111a of the separation devices M_4 to M_N is similar to the calculation of the concentration at the point 111a with respect to the separation device M_3, the further description will be omitted. Note that the measurement data used for calculating the conditions at the points 111a, 111b, and 111c in these calculations is collected from the recording unit 12.

As a whole, by evaluating an equation considering mass balance through the calculation unit 11, that is, an equation on the assumption that when focusing on an inflow point of a certain gas, the masses of the gas flowing into the point and the gas flowing out from the point are equal, and using the measurement outputs of the sensors Fs, Fs1, and Cs1 in the pipeline 2 as input data, the system 1 enables the user of the present embodiment to monitor the composition (concentration) of the supply gas 50 without installing a concentration sensor corresponding to the supply gas 50 supplied to each separation device. Again, it can be emphasized that the calculated concentrations in the supply gas serve as a guide for the user of the present embodiment in controlling the operations of the separation devices. Similarly, the user of the present embodiment can also monitor the flow rate and concentration of the gas downstream of the return gas 52 of the separation devices 5 without installing concentration sensors and flow sensors corresponding to the pipelines 2. Such information may also be useful for controlling the separation devices. In summary, in the system 1, a smaller number of sensors can be used to monitor a plurality of separation devices in the pipeline. This also means that the system 1 can monitor the pipeline 2 with reduced installation and maintenance costs.

(Monitoring of Output of System 1)

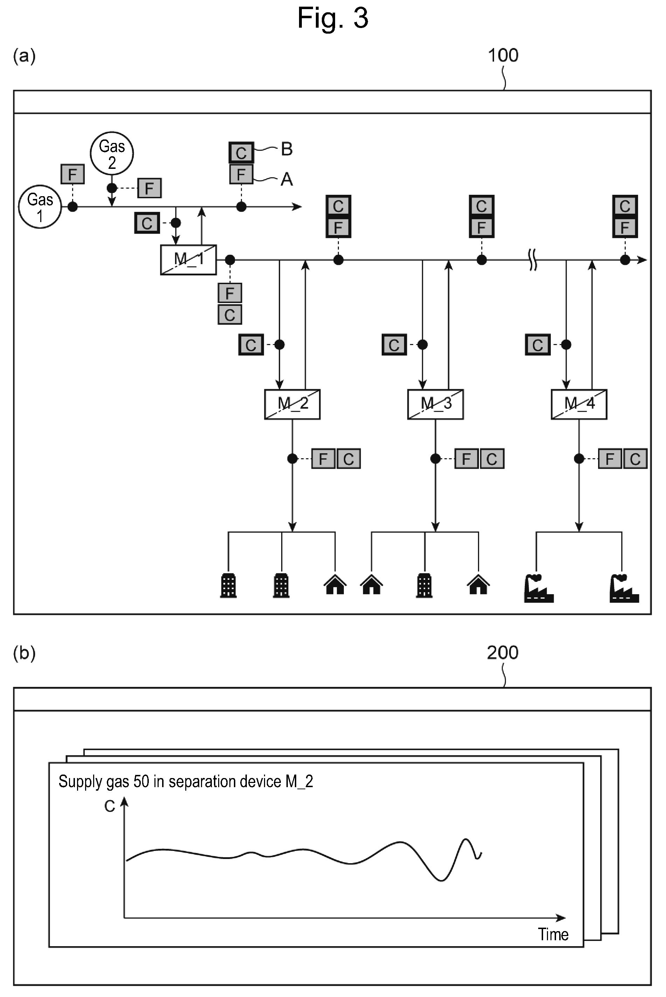

Fig. 3 illustrates an example of display output by the system 1 for monitoring the flow rate and concentration of a gas in the pipeline 2. The display output can include a window 100 that visually indicates the positions of monitoring points in the pipeline 2 as shown in Fig. 3(a). The window 100 is displayed on the display 14 illustrated in Fig. 1. The monitoring points are represented by black circles including the positions of the points 111a, the points 111b, and the sensors Fs, Fs1, and Cs1.

Through the window 100, the user of the present embodiment can distinguish whether a monitored point provides measurement data or calculation data. Further, the user of the present embodiment can identify whether data provided at a monitoring point is a gas flow or a concentration. In this example, the user can identify that a monitored point provides flow rate information when the monitoring point is connected to the letter F and monitoring point provides concentration information when the monitoring point is connected to the letter C. Further, the user can ascertain that a monitoring point provides measurement information if the letter F or C is enclosed in a light gray box with a thin outline (e.g., the box indicated by A), and ascertain that a monitoring point provides calculated information if the letter F or C is enclosed in a light gray box with a thick outline (e.g., the box indicated by B).

As illustrated in Fig. 3(b), visualization of gas flow rate and concentration of a monitoring point is displayed on a window 200. In the present embodiment, as an example, the concentration of the supply gas 50 in the separation device 5(M_2) is displayed. In particular, the window 200 provides a plurality of time-series plots of measured or calculated gas flow rates and concentrations. Measurement information displayed by the system 1 includes at least the time-series flow rate of the gas source (gas 1 and gas 2), and the time-series gas flow rate and the composition of the product gas 51. Calculated flow rates and concentrations displayed on the window 200 can be collected by the system 1 from calculated values of the calculation unit 11. Here, such calculated flow rates and concentrations also include at least the calculated concentration of the supply gas 50 (point 111a) of the separation device 5 and the flow rate and composition downstream of the return gas (point 111b). The present embodiment is also applied to a pipeline 2 in which pressure sensors are disposed at the same position as the flow sensors Fs and Fs1.

[Embodiment 2]

A gas pipeline can also include a compressor for maintaining a required gas flow in a pipe and a turbine for supplying power to the compressor. Turbines use gas from pipelines as fuel. These components were not considered in the previous embodiment. In the present embodiment, the system 1 is used to control a pipeline 2c further including a compressor and a turbine for the aforementioned purposes. The present embodiment will be described focusing only on differences from the first embodiment.

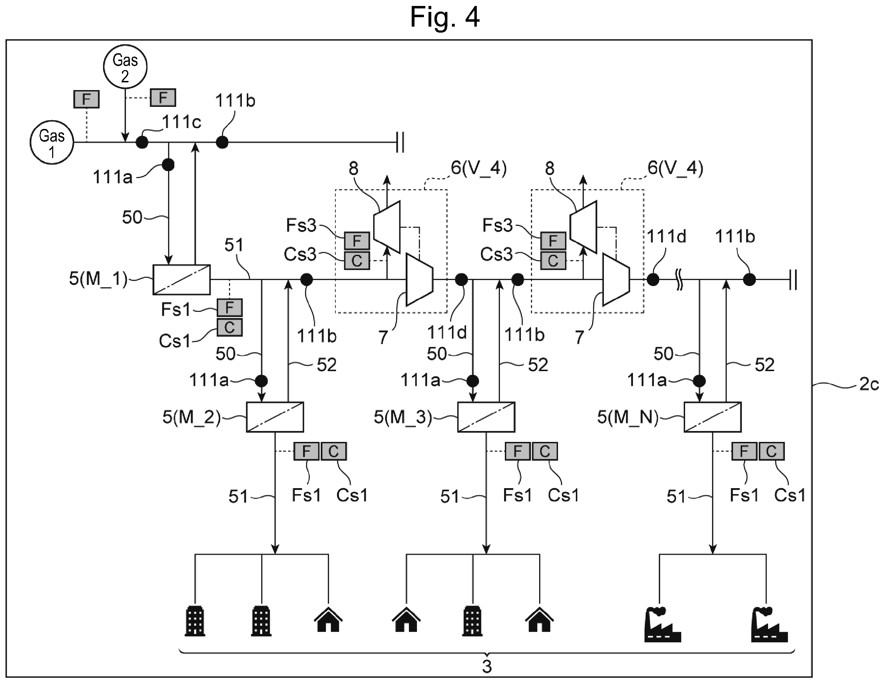

Fig. 4 illustrates an example of the pipeline 2c monitored by the system 1. Here, the pipeline 2c is based on the pipeline 2 further including a plurality of compressors 7 and a plurality of turbines 8. The compressors 7 are always paired with the turbines 8. As described above, this is because the compressors 7 are powered by the turbines 8.

A flow sensor Fs3 and a concentration sensor Cs3 are connected to the inlet of each turbine 8 in order to measure a gas flow rate and a concentration. These sensors are necessary for safe operation and control of the turbines 8. Furthermore, the recording unit 12 can receive and store data measured by these sensors. The turbines 8 use the gas from the pipeline 2c as a fuel and finally discharge the spent gas. This processing changes the mass balance of the pipeline 2c compared to a pipeline without the turbines 8 and the compressors 7. More specifically, upstream and downstream flows of the pairs of turbines 8 and compressors 7 change.

The calculation unit 11 additionally calculates flow rates and concentrations at a plurality of points 111d located downstream of the compressors 7 by the mass balance in consideration of changes in the mass balance due to addition of the turbines 8 and the compressors 7. This also means that the series of calculations performed by the calculation unit 11 additionally includes calculation of the flow rates and the concentrations at the points 111d.

(Point 111d)

In order to calculate the flow rates and the concentrations at the points 111d, the calculation unit 11 can define an inspection volume 6 such that it surrounds one set of the turbine 8 and the compressor 7 and the point 111d is located on the outlet side. Accordingly, an inspection volume 6(V_4) for each pair of the turbine 8 and the compressor 7 is defined. The calculation unit 11 can calculate Formula (1) with respect to the inspection volume 6(V_4) and calculate the flow rate at the point 111d using measurement data of the flow sensor Fs3 and a calculated flow rate at the upstream point 111b. It should also be noted that, due to the mass balance, the gas flow rate entering the turbine 8 and the gas flow rate exiting the turbine 8 are equal.

For the compressors 7 and the turbines 8, a process of mixing or separating gas components is not included. Therefore, due to the mass equilibrium, the gas concentration at the point 111d will be the same as the upstream gas concentration. This can be mathematically expressed by Formula (3a).

$$C_{111d} = C_{upstream} \quad (3a)$$

Here, $C_{111d}$ (kg/kg) is the gas concentration at the point 111d, and $C_{upstream}$ is the gas concentration upstream of the point 111d. To define the gas concentration upstream of the point 111a, the calculation unit 11 may use measurement data or previously calculated data. In this example, the evaluation of Formula (3a) can use the calculated concentration at the upstream point 111b. The above description also applies to the pipeline 2b with pressure sensors disposed at the same positions as the flow sensors Fs, Fs1 and Fs3.

[Embodiment 3]

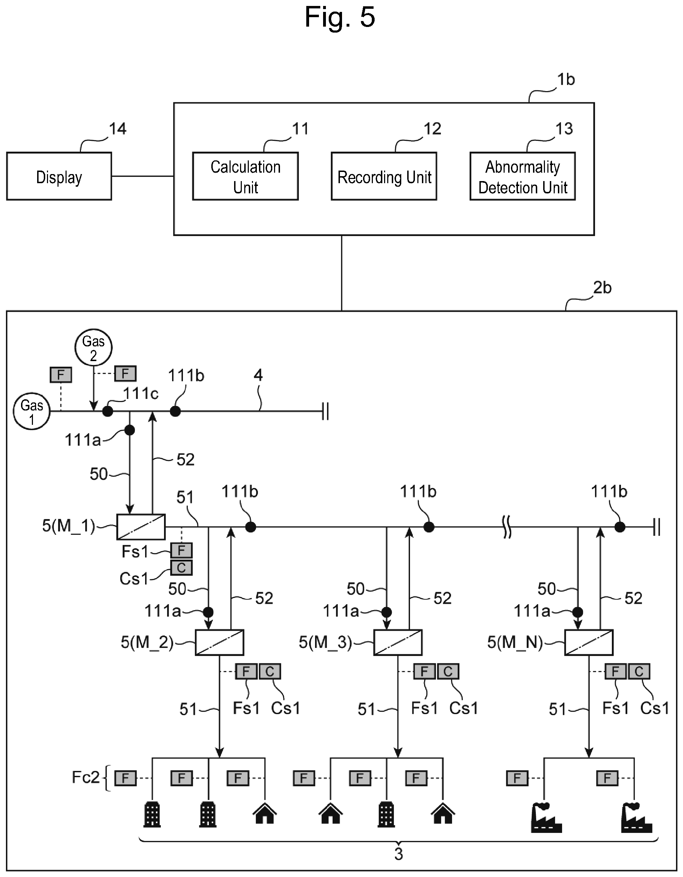

Measured and calculated information provided by the system 1 depends on the measured outputs of the flow sensor Fs1 and the concentration sensor Cs1. However, sensors are generally susceptible to damage, which can result in abnormal measurements. Such a measurement abnormality may lower the reliability of the system 1 if left undetected. This problem is addressed in the present embodiment. Fig. 5 illustrates a system 1b that monitors a pipeline 2b. The pipeline 2b in the present embodiment further includes a plurality of flow sensors Fs2, which are flow sensors that measure the flow rate of a gas supplied to the end user 3. The flow sensors Fs2 correspond to gas meters installed in a home for measuring a gas consumption amount of an individual and calculating a charge of the gas consumption amount.

Note that the description of the present embodiment can also be applied to the pipeline 2b including the compressors 7 and the turbines 8 described in embodiment 2. The recording unit 12 further receives and records data measured by the flow sensor Fs2. The system 1b further includes an abnormality detection unit 13 for detecting abnormal sensor measurements in the pipeline 2b.

(Abnormality Detection Unit 13)

The abnormality detection unit 13 detects abnormality measurements by the flow sensor Fs1 and the concentration sensor Cs1 for monitoring the product gas 51 supplied to the end user 3. This means that, for the pipeline 2b, the abnormality detection range of the abnormality detection unit 13 is from the separation device M_2 to the separation device M_N. First, details of detection of abnormality measurements in the flow sensor Fs1 will be described, and next, details of detection of abnormality measurements in the concentration sensor Cs1 will be described.

(Abnormality in Flow Sensor Fs1)

Due to the mass balance, it is assumed that the amount of the product gas 51 flowing out of the separation device 5 is the same as the amount of the gas supplied to the end user 3 connected to the separation device 5. Based on this principle, the abnormality detection unit 13 detects an abnormality of the flow sensor Fs1 using an error E1 indicating an error of measurement data of the flow sensor Fs1 compared with measurement data of the flow sensor Fs2 connected to the end user 3. Next, specific processing example of detecting an abnormality of Fs1 using the error E1 will be described.

First, the abnormality detection unit 13 calculates the error E1 of the flow sensor Fs1. For example, the abnormality detection unit 13 can calculate the error E1 (%) at time t by calculating an absolute percentage error that treats the flow to the end user as an actual value. This can be mathematically expressed by Formula (4).

$$E1t = (|mpg,t-\Sigma mend,t|/\Sigma mend,t)*100 \quad (4)$$

Here, mpg,t (kg/s) is the flow rate measured by the flow sensor Fs1 at time t, and $\Sigma$mend,t (kg/s) is the total of the flow rates measured by the flow sensor Fs2 at the same time t. In order to simplify the calculation, only the measurement data of the flow sensor Fs2 of the end user 3 receiving the same product gas 51 monitored by the flow sensor Fs1 is used in Formula (4).

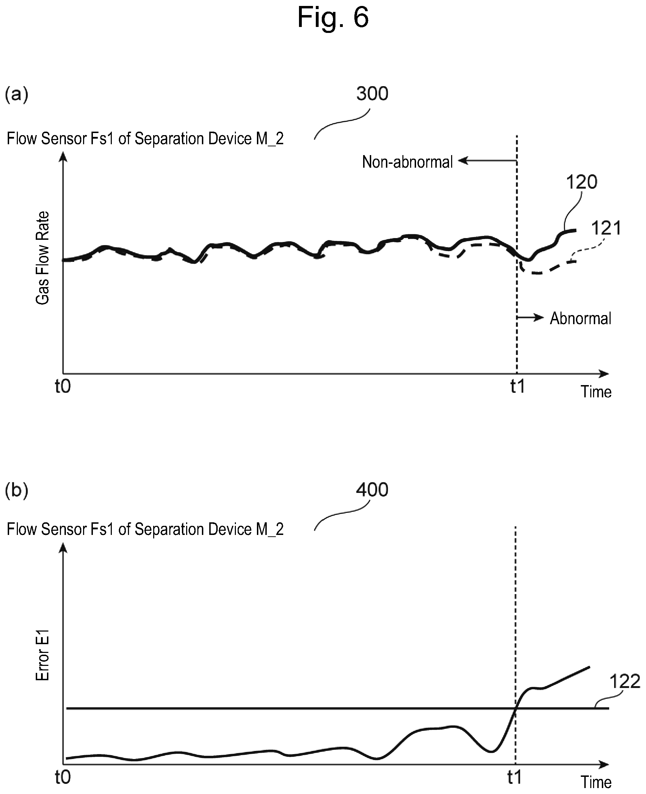

Then, the abnormality detection unit 13 determines whether the measurement data obtained by the flow sensor Fs1 is abnormal based on whether the calculated error E1 exceeds a threshold 122 (refer to Fig. 6(b)). Specifically, when the error E1 exceeds the threshold 122, the abnormality detection unit 13 determines that the measurement data is abnormal. Otherwise, the abnormality detection unit 13 determines that the measurement data is not abnormal. The threshold 122 can be predefined by the user of the present embodiment.

Finally, the abnormality detection unit 13 can generate a display output to guide the user with respect to the generated determination. An example of this display output will be described with reference to Fig. 6. The display output includes a plot 300 and a plot 400. For the determined one flow sensor Fs1, one plot 300 and one plot 400 are generated. In this example, the plot 300 and the plot 400 indicate the display output of the abnormality detection unit 13 generated after abnormality determination is repeated according to the tendency of the flow sensor Fs1 of the separation device M_2 from time t0.

The plot 300 in Fig. 6(a) indicates the gas flow rate on the y-axis and time on the x-axis. A graph 120 shows the tendency of measurement data of the flow sensor Fs1. A graph 121 shows the tendency of the total measured flow rate by the flow sensor Fs2 (equal to $\Sigma$mend,t in Formula (4)). On the other hand, the plot 400 in Fig. 6(b) indicates the calculation error E1 of the flow sensor Fs1. The plot 400 also indicates a plot of the threshold 122.

Between period t0 and time t1, the error E1 does not exceed the threshold 122. Therefore, in this period, the abnormality detection unit 13 determines that there is no abnormality in the measurement data of the flow sensor Fs1. On the other hand, after time t1, the calculated error E1 exceeds the threshold 122. Therefore, the abnormality detection unit 13 determines that the measurement data of the flow sensor Fs1 is abnormal after time t1. The calculated errors E1, $\Sigma$mend, and the determination result by the abnormality detection unit 13 are stored in the recording unit 12.

(Abnormality in Concentration Sensor Cs1 for Product Gas Supplied to End User)

Next, details of detection of measurement abnormality by the concentration sensor Cs1 from the separation device 5 that supplies gas to the end user 3 will be described.

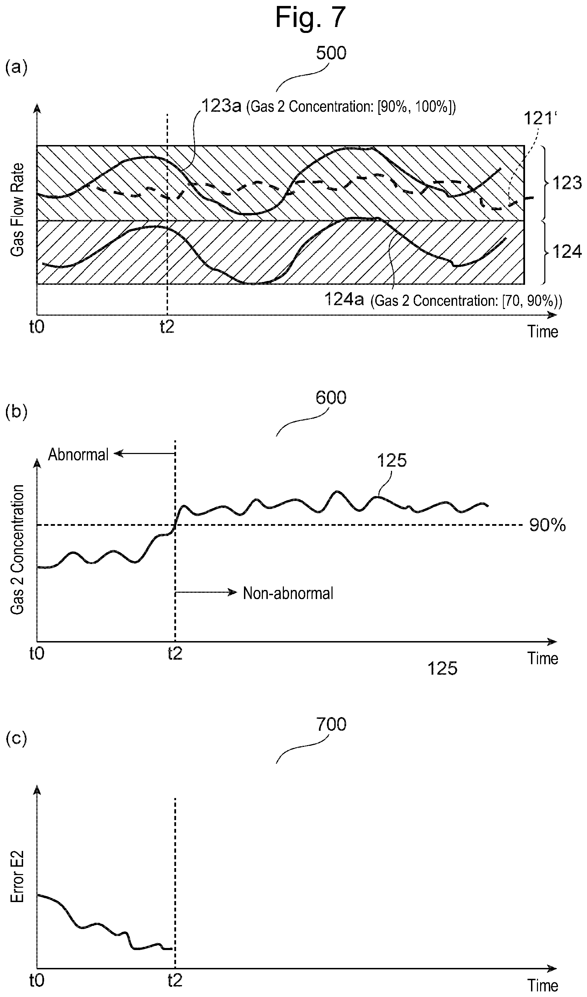

First, the abnormality detection unit 13 generates a correlation plot of flow rates and concentrations using past flow rate and concentration data of the end user. The past flow rate and concentration data of the end user 3 can be previously saved and updated by the user or vendor of the present embodiment using the recording unit 12. The generated correlation plot shows different ranges of gas flow rates for different concentration ranges. An example of generated correlation between flow rates and concentrations will be described later with reference to Fig. 7.

The abnormality detection unit 13 then collects calculated total gas flow rates (=Σmend,t) to the end user 3 at time t. This has been previously calculated and saved in the recording unit 12 (for the sake of clarity, the end user is the end user to which the product gas 51 being monitored by the concentration sensor Cs1 is supplied).

Next, the abnormality detection unit 13 estimates an expected range of the concentration measured by the concentration sensor Cs1 at time t. Specifically, the abnormality detection unit 13 uses the generated correlation plot and the collected total gas flow rates to the end user to estimate the range of the concentration expected by the concentration sensor Cs1. An example of estimation processing will be described later with reference to Fig. 7.

Finally, the abnormality detection unit 13 determines whether the measurement data obtained by the concentration sensor Cs1 is abnormal. Specifically, the abnormality detection unit 13 determines that the measurement data is not abnormal when the measured concentration is within the expected concentration range. Otherwise, the abnormality detection unit 13 determines that the measurement data is abnormal.

When it is determined that the measured concentration is abnormal, the abnormality detection unit 13 can calculate an error E2 of the concentration sensor Cs1 indicating an error of the measurement data by the concentration sensor Cs1 compared with the expected concentration range. The error E2 (%) at time t can be calculated, for example, by treating the mean of the expected concentration range as the actual value and calculating the absolute percentage error. This can be mathematically expressed by Formula (5).

$$E2t = (|Cpg,t-Cexpected,t|/Cexpected,t)*100 \ (5)$$

Here, Cpg,t (kg/kg) is the concentration measured by the concentration sensor Cs1, and Cexpected,t (kg/kg) is the mean of the concentration range expected at time t. The calculated error E2 is also stored in the recording unit 12. Finally, the abnormality detection unit 13 can generate a display output to guide the user with respect to the generated determination.

Fig. 7 illustrates an example of a display output by the abnormality detection unit 13 for detecting an abnormality of the concentration sensor Cs1. The displayed output can include a plot 500 of Fig. 7(a), a plot 600 of Fig. 7(b), and a plot 700 of Fig. 7(c). One plot 500, one plot 600, and one plot 700 can be generated for one concentration sensor Cs1 determined. The plot 500 indicates the gas flow rate on the y-axis and time on the x-axis. The generated flow rates and concentration correlation plot is represented by graphs 123a and 124a and regions 123 and 124.

In this example, the graph 123a shows past gas flow rate data consumed by an end user when the gas concentration of the gas 2 is very high in the mixed gas, that is, when the concentration of the gas 2 is [90%, 100%]. On the other hand, the graph 124a shows past flow rate data consumed by the end user when the gas concentration of the gas 2 is low, that is, when the concentration of the gas 2 is [70%, 90%]. Based on the maximum gas flow rate and the minimum gas flow rate in the graph 123a, the abnormality detection unit 13 can generate and display the region 123 indicating a flow boundary with a high concentration of the gas 2. Similarly, the region 124 is generated and displayed by the abnormality detection unit 13 on the basis of the graph 124a indicating a flow boundary with a low concentration of the gas 2. By visualizing the generated flow rate and concentration correlation plot, the user of the present embodiment can understand the history of the time-series tendency of gas flow rates at different concentration levels of the gas 2. The correlation plot may include an additional region, such as a gas flow rate tendency when the concentration of the gas 2 is [60%, 70%].

The plot 500 also includes a graph 121' that is a tendency of the calculated total gas flow rate of the product gas 51 to the end user (this is similar to the graph 121 of Fig. 6). By observing the plot 500, the user of the present embodiment can recognize an expected range of concentrations measured by the concentration sensor Cs1. For example, when the graph 121' is within the region 123, the expected concentration range for the gas 2 measured by the concentration sensor Cs1 will be within [90%, 100%]. When the graph 121' is within the region 124, the expected concentration range of the gas 2 for the product gas 51 is within [70, 90%].

On the other hand, the plot 600 includes a graph 125 which indicates the concentration value of the gas 2 on the y axis and time on the x axis, and is the tendency of the concentration of the gas 2 based on measurement data obtained by the concentration sensor Cs1.

From time t0 to time t2, the graph 125 is below the concentration 90% line of the gas 2. However, the plot 500 shows that the graph 121' is within the region 123 from the same time t0 to time t2. This indicates that the expected concentration range for the gas 2 is within [90%, 100%]. Since the concentration of the gas 2 measured by the concentration sensor Cs1 is out of the assumed range of the concentration of the gas 2, the abnormality detection unit 13 determines that the concentration of the gas 2 measured by the concentration sensor Cs1 is abnormal. On the other hand, after time t2, the graph 125 exceeds the concentration 90% line of the gas 2, which is within the expected concentration range. Therefore, the abnormality detection unit 13 determines that the measurement data obtained by the concentration sensor Cs1 after time t2 is not abnormal. As described above, the generated flow rate and concentration correlation plot is described on the basis of the concentration of the gas 2. However, the correlation plot can also be based on the gas 1 (or other gas components of the product gas 51).

On the other hand, the plot 700 shows the error E2 calculated for the concentration sensor Cs1. It should be noted that since the error E2 is calculated only when the measurement data of the concentration sensor Cs1 is determined to be abnormal, values after time t2 are not displayed. By visualizing this plot, the user of the present embodiment can evaluate the error of the measurement data obtained by the concentration sensor Cs1.

To summarize the present embodiment, the user of the present embodiment can understand the determination of the abnormality detection unit 13 for the concentration sensor Cs by displaying the plots 500 and 600.

[Embodiment 4]

As described above, the amount of the product gas 51 flowing out of the separation device 5 is expected to be equal to the amount of the gas supplied to the end user 3 connected to the separation device 5 by mass balance. This means that, if an increase in the product gas 51 flowing from the separation device 5 is observed at time t, a similar increase in the amount of gas flowing to the end user 3 is also expected to be observed at the same time. However, due to the distance between the separation device 5 and the end user 3, an increase in the amount of gas flowing to the end user 3 may be observed after an increase in the product gas 51 flowing from the separation device 5. This phenomenon is a time delay and may be particularly significant for large pipelines.

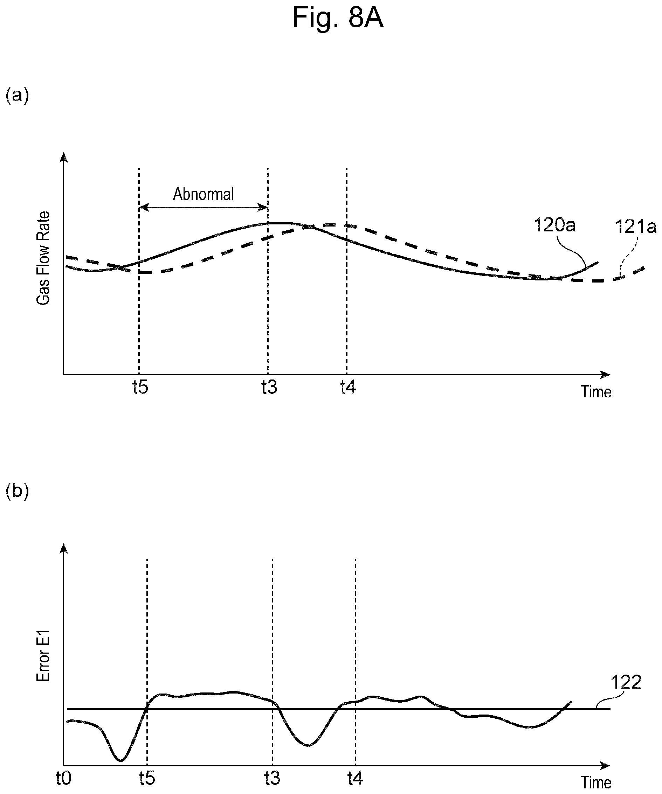

Fig. 8A illustrates an example of a case where there is a time delay in a pipeline to be monitored. In this example, a graph 120a in Fig. 8A(a) illustrates the tendency of measurement data obtained by the flow sensor Fs1, and a graph 121a illustrates the tendency of the total flow rate measured by the flow sensor Fs2.

At time t3, the graph 120a shows the peak of the gas flow rate. This indicates an increase and a subsequent decrease in the gas flowing in the product gas 51. Due to the mass balance, the gas flowing to the end user should show a similar tendency and the graph 121a is expected to show a similar peak at the same time t3. However, due to the time delay in the pipeline, the graph 121a shows the peak of the expected gas flow rate at time t4 after t3.

In the above-described embodiment, the determination by the abnormality detection unit 13 does not take a time delay into consideration. Accordingly, a high error E1 exceeding the threshold 122 may occur, such as from time t5 to time t3 in Fig. 8A(b). As a result, the abnormality detection unit 13 may erroneously determine that the measurement data obtained by the flow sensor Fs of the product gas 51 is abnormal. However, the high error E1 exceeding the threshold 122 between time t5 and time t3 is actually caused by a time delay and is not a measurement abnormality.

In the present embodiment, the abnormality detection unit 13 can also calculate the error E1 at time t according to Formula (4b).

$$E1t = (|mpg,t-\Sigma mend,t+tlay|/\Sigma mend,t+tdelay)*100 \quad (4b)$$

Here, $\Sigma mend,t+tlay$ (kg/s) is the sum of flow rates measured by the flow sensor Fs2 at time t+tlay. Further, the abnormality detection unit 13 can calculate tdelay(s) using, for example, Formula (4c).

$$tdelay = L/v \quad (4c)$$

Here, L is the distance between the flow sensor Fs1 and the flow sensor Fs2, and v is an average speed of gas flowing through the gas pipe. Information necessary for evaluating Formula (4c) can be stored in advance in the recording unit 12.

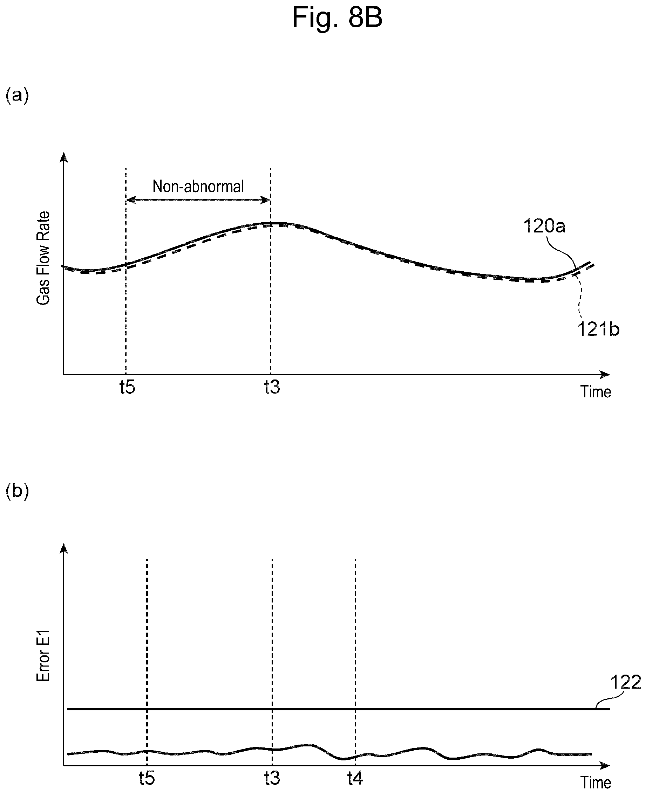

Fig. 8B illustrates an example of a display output by the abnormality detection unit 13 in consideration of a time delay. In Fig. 8B(a), a graph 120a shows the tendency of measurement data obtained by the flow sensor Fs1 with respect to the product gas 51. A graph 121b shows the tendency of measurement data obtained by the flow sensor Fs2 for the end user connected to the product gas 51 in consideration of a calculated time delay. At time t3, it can be ascertained that the peaks of the graph 120a and the graph 121b coincide with each other, and the time delay is eliminated. Further, as illustrated in Fig. 8B(b), since the error E1 calculated from time t5 to time t3 is below the threshold 122, it is determined that there is no abnormality. Therefore, inaccurate determination of the abnormality detection unit 13 due to the time delay is avoided.

[Embodiment 5]

Some measurement abnormalities are very serious, and others are minor. A significant abnormality is much less reliable in monitoring than a minor abnormality. In addition, the maintenance work by the user of the present embodiment may also change according to the scale of the abnormality. By visualizing the errors E1 and E2, the user of the present embodiment can evaluate the scale of a sensor abnormality in the pipeline to be monitored. However, displaying all the plots of the errors E1 and E2 may place a large load on the CPU. Furthermore, in the above-described embodiments, the influence of measurement abnormalities of sensors on calculation data of the calculation unit 11 was not evaluated. The present embodiment addresses these problems. Also in the present embodiment, differences from the previous embodiments will be mainly described.

In the present embodiment, the abnormality detection unit 13 based on embodiment 3 or embodiment 4 further classifies the reliability levels of the sensors and data calculated by the calculation unit 11 on the basis of the calculated errors E1 and E2. Specifically, the abnormality detection unit 13 calculates a weighting error Ew on the basis of the errors E1 and E2 to classify the reliability of measurement in the sensors Fs1 and Cs1 and the points 111a and 111b.

More specifically, the abnormality detection unit 13 calculates weighting errors Ew(%) of the flow sensor Fs1 and the concentration sensor Cs1 using Formulas (6a) and (6b), respectively.

$$Ew\_Fs1 = wE1 \quad (6a)$$

$$Ew\_Cs1 = wE2 \quad (6b)$$

Here, E1 is the calculation error E1 of Fs1, E2(%) is the calculation error E2 of Cs1, and w is a weight part assigned to the error E1 or E2. In Formulas (6a) and (6b), w is set to 1.

In addition, the abnormality detection unit 13 calculates a weighting error Ew(%) of the calculated flow rate at the point 111b using Formula (6c).

$$Ew\_F = \Sigma wEw\_Fs1 \quad (6c)$$

Here, Ew_Fs1(%) is a weighting error Ew calculated with respect to the flow sensor Fs1 located upstream of the calculation point 111b, whereas w is a weight part assigned to Ew_Fs1.

Further, the abnormality detection unit 13 calculates a weighting error Ew(%) of the calculated concentration at the point 111a or 111b using Formula (6d).

$$Ew\_C = \Sigma w\varepsilon Ew\_Fs1 - \Sigma wEw\_Cs1 \quad (6d)$$

Here, Ew_Fs1/Ew_Cs1(%) is a weighting error Ew calculated with respect to the flow sensor Fs1/concentration sensor Cs1 located upstream of the point 111a or 111b, and w is a weight part assigned to the error Ew_Fs1/Ew_Cs1.

In Formulas (6c) and (6d), the weight part w is assigned such that the errors used to evaluate the aforementioned formulas have equal weights. For example, if four Ew values are used to evaluate Formula (6c) (or (6d)), w is assigned as 0.25.

As a whole, the larger the weighting error Ew, the larger the abnormality and the lower the reliability. Next, the abnormality detection unit 13 proceeds to processing of classifying the reliability levels of monitoring points in the pipeline 2b using the calculated Ew. Specifically, the abnormality detection unit 13 classifies a reliability level as any of reliabilities "high," "medium," and "low."

For example, if the calculated weighting error Ew falls within a low error range a, the reliability level is classified as high. If the calculated weighting error Ew falls within a medium error range b, the reliability level is classified as medium, and if the calculated weighting error Ew falls within a high error range c, the reliability level is classified as low.

The error ranges a, b, and c are defined such that they do not overlap each other. This makes it possible to clearly classify the reliability level as only high, medium or low. For example, the error range a can be defined as [0%, 10%], the error range b can be defined as [10%, 30%], and the error range c can be defined as [30%, 100%]. The values of the ranges a, b, and c can be predefined by the user of the present embodiment or a vendor. The abnormality detection unit 13 further generates a display output for guiding the user of the present embodiment to the result of reliability level classification.

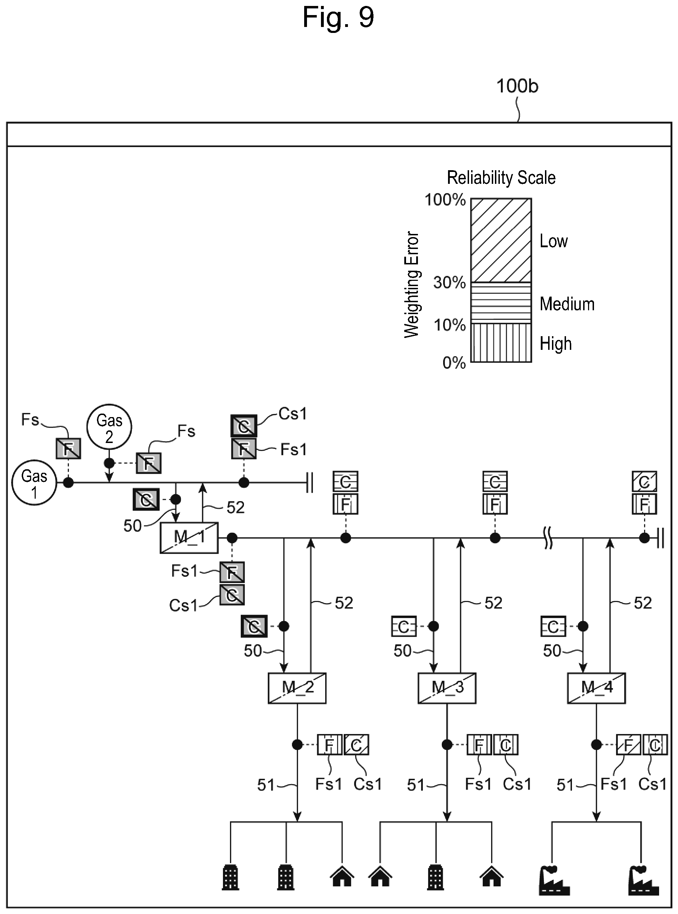

Fig. 9 illustrates an example of a display output of the abnormality detection unit 13, which visualizes reliability classification at time t. The display output includes a window 100b displayed on the display 14 (refer to Fig. 1 and the like). The components of the display output are similar to the components of the window 100 described along Fig. 3.

The difference between window 100 and window 100b is that the window 100b adds a reliability scale visualization divided into high, medium, and low. The reliability scale is designed with different colors for high, medium, and low. In this example, the reliability "high" is vertical line hatching, the reliability "medium" is horizontal line hatching, and the reliability "low" is diagonal line hatching. The error range values of the high, medium, and low reliability levels are also displayed.

By observing this display output, the user of the present embodiment can rapidly evaluate the current reliability level of measurement data of the sensors in the pipeline 2b and calculated data by the calculation unit 11. For example, if a monitoring point is connected to a diagonal line hatched rectangle, the user can evaluate that the current reliability of the measured/calculated flow rate/concentration at that monitoring point is low and the weighted error thereof is within 30 to 100%. As a result, the user can plan maintenance or control actions to address the low reliability at the monitoring point. Further, the user can determine which data to trust when monitoring the pipeline 2b. In the case of a monitoring point whose reliability is unclassified, diagonal lines are added to the rectangle.

[Embodiment 6]

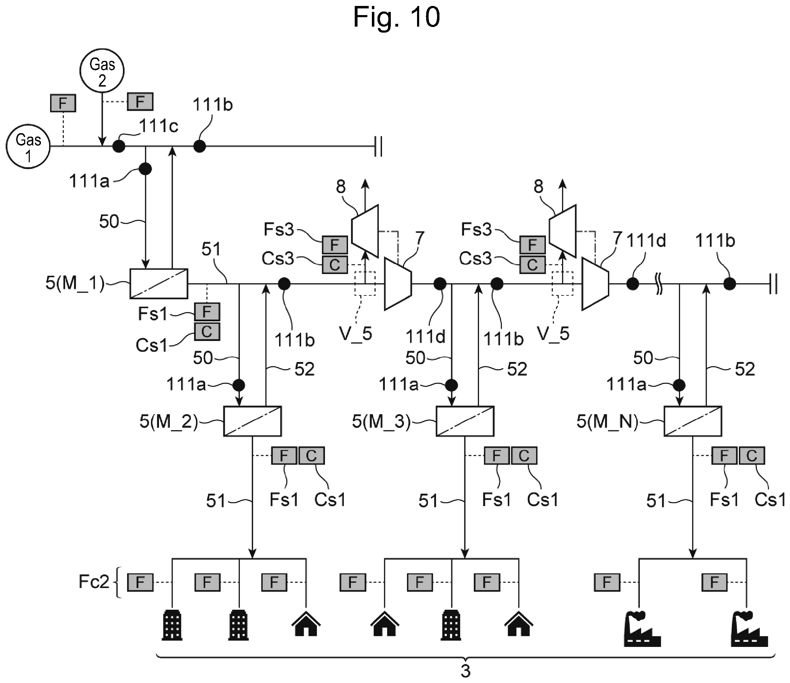

As previously described, the system 1b can also be used to monitor the pipeline 2b including the compressors 7 and the turbines 8. Fig. 10 is an example of such a pipeline.

In the present embodiment, the abnormality detection unit 13 further uses the measurement data of the concentration sensor Cs3 connected upstream of the turbine 8 to detect a measurement abnormality and classify the reliability level. Accordingly, it is expected to improve the accuracy of abnormality detection and reliability classification.

Due to the mass balance around inspection volumes V_5 (Fig. 10), the gas concentration at the point 111b should be the same as the gas concentration provided to the turbine 8. This means that the calculated concentration at the point 111b should be the same as the measured concentration. Using this relationship, the abnormality detection unit 13 further calculates an error E3 at the point 111b. The error E3 indicates an error in the calculated concentration at the point 111b compared to the measurement data of the concentration sensor Cs3 monitoring the turbine 8 downstream of the point 111b.

The abnormality detection unit can calculate the error E3(%) at the point 111b using the absolute percentage error using the measurement data of the concentration sensor Cs3 as the actual measurement value.

(Abnormality Detection)

Details of additionally using the error E3 in detecting an abnormality in the flow sensor Fs1 will be described below.

In the above-described embodiments, the abnormality detection unit 13 determines whether the measurement data obtained by the flow sensor Fs1 is abnormal by checking whether the calculated error E1 exceeds the threshold 122.

In the present embodiment, the abnormality detection unit 13 determines whether the measurement data obtained by the flow sensor Fs1 is abnormal by further checking whether the error E3 at the upstream point 111b of the flow sensor Fs1 exceeds a threshold 122b.

Specifically, when the error E1 exceeds the threshold 122 or when the error E3 at the upstream point 111b of the flow sensor Fs1 exceeds the threshold 122b, the abnormality detection unit 13 determines that the measurement data of the flow sensor Fs1 is abnormal. Otherwise, the abnormality detection unit 13 determines that the measurement data is not abnormal.

In the above-described embodiments, the abnormality detection unit 13 determines whether the measurement data of the concentration sensor Cs1 is abnormal depending on whether the measurement data of the concentration sensor Cs1 exceeds the expected concentration range.

On the other hand, in the present embodiment, the abnormality detection unit 13 determines whether the measurement data obtained by the concentration sensor Cs1 is abnormal by further checking whether the error E3 at the point 111b on the upstream side of the concentration sensor Cs1 exceeds a threshold 122c.

Specifically, the abnormality detection unit 13 determines that the measurement data of the concentration sensor Cs1 is abnormal when the measurement data of the concentration sensor Cs1 exceeds the expected concentration range or when the error E3 at any point 111b upstream of the concentration sensor Cs1 exceeds the threshold 122c. Otherwise, the abnormality detection unit 13 determines that the measurement data is not abnormal. The thresholds 122b and 122c may be predefined by the user of the present embodiment.

By adding the error E3, the abnormality detection unit 13 can detect a measurement abnormality that cannot be detected only by the error E1 or the flow rate/concentration correlation plot. Furthermore, in the above-described embodiment, the abnormality detection unit 13 can detect only abnormalities of the flow sensor Fs1 and the concentration sensor Cs1 that monitor the product gas 51 supplied to the end user 3. Accordingly, abnormality detection of the separation devices M_2 to M_N is limited. The abnormality detection unit 13 can detect abnormalities of the flow sensor Fs1 and the concentration sensor Cs1 even in the separation device M_1 by using the error E3 for abnormality detection.

(Reliability Level)

In calculation of the weighting errors Ew of the flow sensor Fs1 and the concentration sensor Cs1, the error E3 is also considered. Therefore, the weighting errors Ew of the flow sensor Fs1 and the concentration sensor Cs1 are calculated using Formulas (7a) and (7b), respectively.

$$Ew\_Fs1 = wE1 + \Sigma wE3\varepsilon \quad (7a)$$

$$Ew\_Cs1 = wE2 + \Sigma wE3\varepsilon \quad (7b)$$

Here, E3(%) is an error E3 at the point 111b upstream of the flow sensor Fs1 or the concentration sensor Cs1. Since a plurality of points 111b may be present upstream of the flow sensor Fs1 or the concentration sensor Cs1, an addition operation is performed on the error E3. The accuracy of reliability classification can be improved by adding the error E3. Furthermore, the reliability level classification range can be expanded.

According to the embodiments of the present invention described above, the following operational effects are obtained.

(1) A pipeline management system according to the present invention, the pipeline management system according to the present embodiment is a pipeline management system for monitoring a pipeline that supplies gas to an end user, the pipeline management system including a pipeline system to which gas is supplied and a control system for controlling the pipeline system, in which the pipeline system includes a gas source, a pipe connected to the gas source, a gas separation device connected to the pipe and configured to separate gas supplied from the gas source into a plurality of gas streams, a first flow sensor that measures a flow rate of gas supplied to a main supply pipe of the pipeline, a second flow sensor that measures a flow rate of a product gas flowing out of the gas separation device, and a first concentration sensor that measures a concentration of the product gas, and the control system includes a recording unit that records measurement data of the first and second flow sensors and measurement data of the first concentration sensor, and a calculation unit that calculates a concentration of a gas stream at a position along a supply gas supplied to the gas separation device and a flow rate and a concentration of a gas stream at a position downstream of a return gas returned from the gas separation device to the main supply pipe according to mass balance on the basis of measurement results of the first and second flow sensors and the first concentration sensor.

According to the above configuration, by calculating a composition of an unmeasured point, it is possible to monitor a gas composition by the gas separation device with a small number of sensors installed.

(2) The pipeline system further includes a compressor for maintaining a flow of gas stream in the pipeline, a turbine that supplies power to the compressor, and a third flow sensor and a second concentration sensor that measure a flow rate and a concentration of gas supplied to the turbine, in which the recording unit is further configured to record measurement data of the third flow sensor and the second concentration sensor, and the calculation unit is further configured to calculate a flow rate and a concentration of gas stream downstream of the compressor on the basis of measurement results of the third flow sensor and the second concentration sensor. As described above, the compressor and the turbine are often installed in the pipeline, but by applying the present invention, it is possible to monitor a gas composition without increasing the number of installed sensors even when the number of compressors and turbines increases.

(3) The pipeline system further includes a pressure sensor at the same positions as the first flow sensor and/or the second flow sensor, in which the recording unit is further configured to record measurement data of the pressure sensor. This makes it possible to measure a gas composition more accurately also using the measurement data of the pressure sensor.

(4) The control system further includes an abnormality detection unit that detects an abnormality in the gas stream flowing through the pipeline, the pipeline system further includes a fourth flow sensor that measures a gas flow rate of the product gas at the end user, the recording unit is further configured to record measurement data of the fourth flow sensor, and the abnormality detection unit determines a measurement abnormality due to the second flow sensor that measures the flow rate of the product gas according to whether a first error in measurement data of the second flow sensor exceeds a threshold compared to a sum of measurement data of the fourth flow sensor that measures the flow rate of the same product gas at the end user, determines a measurement abnormality due to the first concentration sensor that measures the flow rate of the product gas from the gas separation device by generating a correlation plot of flow rates and concentrations on the basis of past gas flow rate and concentration data of the end user, estimating an expected concentration range of the product gas using the generated correlation plot and a sum of measurement data of the fourth flow sensor that measures a flow rate of the same product gas at the end user, and determining whether the measurement data of the first concentration sensor is outside the expected concentration range, and calculates a second error in the measurement data of the first concentration sensor compared to an expected concentration range of a concentration sensor that measures the flow of the product gas from the gas separation device. This makes it possible to accurately predict a measurement error of a sensor on the basis of data already obtained by calculation or data actually obtained in the past.

(5) The abnormality detection unit is further configured to calculate a time delay in the pipeline, and the calculated time delay is further used in calculating the first error for abnormality detection. As the distance of the pipeline becomes longer, the distance between sensors becomes longer, and a time delay becomes a problem. Therefore, it is necessary to perform error calculation in consideration of a time delay in this manner.

(6) The abnormality detection unit is further configured to classify reliability levels of the measurement data of the first/second/third flow sensors and the first concentration sensor in the pipeline and the calculated data by the calculation unit on the basis of the first error. As a result, it is possible to determine reliability on the basis of an error and appropriately select a maintenance treatment or the like according to the reliability.

(7) The pipeline system further includes a compressor for maintaining a flow of gas stream in the pipeline, a turbine that supplies power to the compressor, and a third flow sensor and a second concentration sensor that measure a flow rate and a concentration of gas provided to the turbine, in which the abnormality detection unit further calculates a calculated third error downstream of the return gas compared to measurement data of the second concentration sensor of the turbine located downstream of the return gas, and classifies a reliability level on the basis of the third error in addition to the first error. As a result, since the determination criteria increase, it is possible to determine reliability more accurately.

Note that the present invention is not limited to the above embodiments, and various modifications are possible. For example, the above-described embodiments have been described in detail in order to describe the present invention in an easy-to-understand manner, and the present invention is not necessarily limited to an aspect including all the described configurations. Further, a part of the configuration of a certain embodiment can be replaced with the configuration of another embodiment. In addition, the configuration of another embodiment can be added to the configuration of a certain embodiment. In addition, a part of the configuration of each embodiment can be deleted, or another configuration can be added or replaced.

Reference Signs List

| | |
|---|---|
| 1 | Pipeline management system |
| 2 | Pipeline |
| 4 | Main supply pipe |
| 5 | Gas separation device |
| 7 | Compressor |
| 8 | Turbine |
| 11 | Calculation unit |
| 12 | Recording unit |
| 13 | Abnormality detection unit |
| Fs, Fs1, Fs2, Fs3 | Flow sensor |
| Cs1, Cs3 | Concentration sensor |

**Claims**

1.  A pipeline management system for monitoring a pipeline that supplies gas to an end user, comprising a pipeline system to which the gas is supplied and a control system for controlling the pipeline system,

    wherein the pipeline system comprises a gas source, a pipe connected to the gas source, a gas separation device connected to the pipe and configured to separate gas supplied from the gas source into a plurality of gas streams, a first flow sensor that measures a flow rate of gas supplied to a main supply pipe of the pipeline, a second flow sensor that measures a flow rate of product gas flowing out of the gas separation device, and a first concentration sensor that measures a concentration of the product gas, and
    the control system comprises a recording unit that records measurement data of the first and second flow sensors and measurement data of the first concentration sensor, and a calculation unit that calculates a concentration of a gas stream at a position along a supply gas supplied to the gas separation device and a flow rate and a concentration of a gas stream at a position downstream of a return gas returned from the gas separation device to the main supply pipe according to mass balance on the basis of measurement results of the first and second flow sensors and the first concentration sensor.

2.  The pipeline management system according to claim 1, wherein the pipeline system further comprises a compressor for maintaining a flow of gas stream in the pipeline, a turbine that supplies power to the compressor, and a third flow sensor and a second concentration sensor that measure a flow rate and a concentration of gas supplied to the turbine,

wherein the recording unit is further configured to record measurement data of the third flow sensor and the second concentration sensor, and
the calculation unit is further configured to calculate a flow rate and a concentration of gas stream downstream of the compressor on the basis of measurement results of the third flow sensor and the second concentration sensor.

3.  The pipeline management system according to claim 1, wherein the pipeline system further comprises a pressure sensor at the same positions as the first flow sensor and/or the second flow sensor,
wherein the recording unit is further configured to record measurement data of the pressure sensor.

4.  The pipeline management system according to claim 1, wherein the control system further comprises an abnormality detection unit that detects an abnormality in a gas stream flowing through the pipeline,

    the pipeline system further comprises a fourth flow sensor that measures a gas flow rate of the product gas at the end user,
    the recording unit is further configured to record measurement data of the fourth flow sensor, and the abnormality detection unit determines a measurement abnormality due to the second flow sensor that measures the flow rate of the product gas according to whether a first error in measurement data of the second flow sensor exceeds a threshold compared to a sum of measurement data of the fourth flow sensor that measures the flow rate of the same product gas at the end user,
    determines a measurement abnormality due to the first concentration sensor that measures the flow rate of the product gas from the gas separation device by generating a correlation plot of flow rates and concentrations on the basis of past gas stream flow rate and concentration data of the end user, estimating an expected concentration range of the product gas using the generated correlation plot and a sum of measurement data of the fourth flow sensor that measures a flow rate of the same product gas at the end user, and determining whether the measurement data of the first concentration sensor is outside the expected concentration range, and
    calculates a second error in the measurement data of the first concentration sensor compared to an expected concentration range of a concentration sensor that measures the flow of the product gas from the gas separation device.

5.  The pipeline management system according to claim 4, wherein the abnormality detection unit is further configured to calculate a time delay in the pipeline, and the calculated time delay is further used in calculation of the first error for abnormality detection.

6.  The pipeline management system according to claim 4, wherein the abnormality detection unit is further configured to classify reliability levels of measurement data of the first/second/third flow sensors and the first concentration sensor in the pipeline and calculation data by the calculation unit on the basis of the first error.

7.  The pipeline management system according to claim 6, wherein the pipeline system further comprises a compressor for maintaining a flow of gas stream in the pipeline, a turbine that supplies power to the compressor, and a third flow sensor and a second concentration sensor that measure a flow rate and a concentration of gas supplied to the turbine, wherein the abnormality detection unit further calculates a calculated third error downstream of a return gas compared to measurement data of the second concentration sensor of the turbine located downstream of the return gas, and classifies the reliability level on the basis of the third error in addition to the first error.

# Fig. 1

Fig. 2

# Fig. 3

(a)                                                                                    100

(b)                                                                                    200

Supply gas 50 in separation device M_2

Fig. 4

# Fig. 5

# Fig. 6

(a)

300

Flow Sensor Fs1 of Separation Device M_2

Non-abnormal

120

121

Gas Flow Rate

Abnormal

t0                                                                    t1    Time

(b)

400

Flow Sensor Fs1 of Separation Device M_2

Error E1

122

t0                                                                    t1    Time

# Fig. 7

(a)

500

123a (Gas 2 Concentration: [90%, 100%])

121'

123

124

t0     t2     Time

124a (Gas 2 Concentration: [70, 90%))

(b)

600

Abnormal

125

90%

Non-abnormal

t0     t2     Time

125

(c)

700

t0     t2     Time

# Fig. 8A

(a)

(b)

# Fig. 8B

(a)

(b)

# Fig. 9

# Fig. 10

## INTERNATIONAL SEARCH REPORT

| International application No. |
|---|
| **PCT/JP2024/022153** |

**A. CLASSIFICATION OF SUBJECT MATTER**

*F17D 3/01*(2006.01)i; *C01B 3/00*(2006.01)i; *F17C 7/00*(2006.01)i; *F17D 1/04*(2006.01)i
FI: F17D3/01; F17D1/04; C01B3/00 Z; F17C7/00 A

According to International Patent Classification (IPC) or to both national classification and IPC

**B. FIELDS SEARCHED**

Minimum documentation searched (classification system followed by classification symbols)

F17D3/01; C01B3/00; F17C7/00; F17D1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/230124 A1 (HITACHI, LTD.) 03 November 2022 (2022-11-03)<br>paragraphs [0015]-[0039], fig. 1-3 | 1-7 |
| A | JP 2022-7936 A (SEKIYU COMBINAT KODO TOGO UNEI GIJUTSU KENKYU KUMIAI) 13 January 2022 (2022-01-13)<br>paragraph [0108] | 1-7 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 August 2024** | **03 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/022153**

| Patent document cited in search report | | | Publication date (day/month/year) | Patent family member(s) | Publication date (day/month/year) |
|---|---|---|---|---|---|
| WO | 2022/230124 | A1 | 03 November 2022 | EP 4332427 A1 paragraphs [0019]-[0050], fig. 1-3 | |
| JP | 2022-7936 | A | 13 January 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023044745 A
- JP 2022015364 A